# EUROPÄISCHE PATENTSCHRIFT

(11) **EP 4 502 738 B1**
(45) Veröffentlichungstag und Bekanntmachung des Hinweises auf die Patenterteilung: **13.05.2026**
(21) Anmeldenummer: 23188694.6
(22) Anmeldetag: 31.07.2023
(51) Int. Cl.: G05B 19/042, G05B 9/02, G05B 23/02

(54) **SCHALTUNGSANORDNUNG FÜR DIE STEUERUNG EINER MASCHINE UND MASCHINENSYSTEM**
CIRCUIT ARRANGEMENT FOR CONTROLLING A MACHINE AND MACHINE SYSTEM
CIRCUIT POUR LA COMMANDE D'UNE MACHINE ET SYSTÈME DE MACHINE

(43) Veröffentlichungstag der Anmeldung: 05.02.2025
(73) Patentinhaber: Siemens Aktiengesellschaft, 80333 München (DE)
(72) Erfinder: Fröhlich, Joachim, 85614 Kirchseeon (DE); Rothbauer, Stefan, 86156 Augsburg (DE); Stückjürgen, Christoph, 80807 München (DE); Zeller, Marc, 81243 München (DE)
(74) Vertreter: Siemens Patent Attorneys

(56) Entgegenhaltungen:
- EP-A1- 1 589 386
- DE-A1- 102014 100 970
- DE-A1- 102015 118 151

## Beschreibung

Die Erfindung betrifft eine Schaltungsanordnung für die Steuerung einer Maschine, mit zumindest einer ersten elektronischen Recheneinrichtung mit einer Steuerungsfunktion zum Erzeugen eines Steuersignals für die Maschine, wobei die elektronische Recheneinrichtung zumindest einen internen Datensensor zum Erzeugen eines ersten Sicherheitssignals für eine Sicherheitseinrichtung für die Maschine aufweist. Ferner betrifft die Erfindung ein Maschinensystem. Um sicherheitskritische Automatisierungsaufgaben auszuführen, die eine kontinuierliche Überwachung und Steuerung erfordern, muss eine Automatisierungssoftware zuverlässig ausgeführt werden. Es muss jederzeit gewährleistet sein, dass in einem Fehlerfall ein sicherer Systemzustand erreicht werden kann, zum Beispiel ein Notstopp einer Maschine oder ein Wiederanlaufpunkt ohne Unterbrechung des gesteuerten Prozesses. Auch wird zu diesem Zweck in der Regel dezidierte Hardware, zum Beispiel ein ausfallsicheres SPS, und Software für fehlertolerante Systeme verwendet. Aus Sicherheitsgründen können sicherheitskritische Automatisierungsaufgaben im Stand der Technik nicht auf handelsüblicher Standardhardware ausgeführt werden.

Die Druckschrift EP 1 589 386 A1 offenbart eine zu steuernde Prozesseinrichtung. Die zu steuernde Prozesseinrichtung wird durch zumindest ein Prozessmodul und zumindest ein Sicherheitsmodul gesteuert. Das Prozessmodul übermittelt nicht sicherheitsrelevante Prozesssignale. Das Sicherheitsmodul übermittelt die Prozesssicherheit betreffende Sicherheitssignale. Die Signale werden logisch miteinander verknüpft und das Ergebnis an einem Steuerausgang einer Steuereinheit bereitgestellt, an den die zu steuernde Prozesseinrichtung angeschlossen ist.

Die Druckschrift DE 10 2014 100970 A1 betrifft eine Vorrichtung zum sicheren Abschalten einer elektrischen Last. E/A-Einheiten mit Ein- und/oder Ausgängen sind offenbart, die zur Signalaufnahme und/oder -ausgabe, d. h. zum Auslesen von Sensoren und zum Ansteuern von Aktoren, dienen.

Die Druckschrift DE 10 2015 118151A1 offenbart einen Sicherheitssensor zur Überwachung der Betriebssicherheit einer Anlage.

Aufgabe der vorliegenden Erfindung ist es, eine Schaltungsanordnung und ein Maschinensystem zu schaffen, mittels derer sicherheitskritische Funktionen im laufenden Betrieb geprüft werden können und gegebenenfalls Sicherheitsmaßnahmen ergriffen werden können.

Diese Aufgabe wird durch eine Schaltungsanordnung gemäß Anspruch 1 gelöst. Vorteilhafte Ausgestaltungsformen sind in den Unteransprüchen angegeben.

Ein Aspekt der Erfindung betrifft eine Schaltungsanordnung für die Steuerung einer Maschine, mit zumindest einer ersten elektronischen Recheneinrichtung mit einer Steuerungsfunktion zum Erzeugen eines Steuersignals für die Maschine, wobei die elektronische Recheneinrichtung zumindest einen internen Datensensor zum Erzeugen eines ersten Sicherheitssignals für eine Sicherheitseinrichtung für die Maschine aufweist.

Es ist dabei ein externer Datensensor vorgesehen, welcher mit dem internen Datensensor gekoppelt ist, wobei der externe Datensensor zum Erzeugen eines zweiten Sicherheitssignals für die Sicherheitseinrichtung ausgebildet ist. Insbesondere ist es somit ermöglicht, dass mit entsprechender Standardhardware auch sicherheitskritische Funktionen im laufenden Betrieb geprüft werden können und gegebenenfalls Sicherheitsmaßnahmen ergriffen werden können. Dabei macht sich die Erfindung zunutze, dass die Notsteuerung sowohl über den internen Datensensor als auch den externen Datensensor erfolgen kann. Unter dem internen Datensensor ist dabei zu verstehen, dass der Datensensor als Teil der Steuerungsfunktion bereitgestellt wird. Unter externem Datensensor ist dabei zu verstehen, dass der Datensensor extern zur Steuerungsfunktion bereitgestellt wird.

Insbesondere ist somit die Erfindung auf eine verteilte, zeitgesteuerte Schaltungsanordnung mit Steuerungsfunktionen bezogen, die auf der ersten elektronischen Recheneinrichtung eingesetzt wird. Die Steuerungsfunktion steuert dabei die Maschine über eine entsprechende Verbindung. Die Schaltungsanordnung kann dabei über die Sicherheitseinrichtung verfügen, die die Maschine in einen sicheren Zustand versetzen kann.

Im Vergleich zum Stand der Technik bietet die Erfindung die Vorteile, dass Kosten für externe Testsysteme eingespart werden können, einschließlich der Kosten für die Integration von Testsystemen, da alle erforderlichen Komponenten in der Schaltungsanordnung selbst eingesetzt werden. Ferner können sicherheitsrelevante Funktionen mit höheren Integritätsstufen unterstützt werden. Insbesondere durch den Einsatz des externen Datensensors und des internen Datensensors auf verschiedenen elektronischen Recheneinrichtungen können einige Klassen von Zufallsfehlern aufgedeckt werden, insbesondere solche, die keinen Vergleich mit einer anderen redundanten Steuerungsfunktion erfordern. Der interne Datensensor und der externe Datensensor können sich gegenseitig überwachen und einige Klassen von Fehlern in dem internen Datensensor oder dem externen Datensensor aufdecken. Ferner können zeitkritische Tests aufgrund des Wegfalls von kommunikationsverzögernden Umlaufzeiten zwischen dem externen Datensensor und dem internen Datensensor durchgeführt werden, wenn der interne Datensensor den Test vor Ort, lokal in der Steuerungsfunktion durchführt. Ferner können zeitkritische Sicherheitseingriffe durchgeführt werden. Dies bedeutet insbesondere Notstopps, da zeitkritische Tests als Teil eines Sicherheitsmonitors durchgeführt werden können. Des Weiteren ist ein flexibler Einsatz von Tests je nach Zweck, Umfang und Anforderung möglich. Die Tests können dabei lokal über den internen Datensensor mit der Steuerungsfunktion integriert werden, zum Beispiel über zeitkritische Tests. Andere Tests können mit dem externen Datensensor integriert und außerhalb der Steuerungsfunktion ausgeführt werden.

Gemäß einer vorteilhaften Ausgestaltungsform ist der externe Datensensor auf einer zweiten elektronischen Recheneinrichtung der Schaltungsanordnung ausgebildet. Die zweite elektronische Recheneinrichtung ist dabei insbesondere separat zur ersten elektronischen Recheneinrichtung ausgebildet. Die elektronischen Recheneinrichtungen können dabei im Wesentlichen gleich oder auch unterschiedlich ausgebildet sein. Somit ist es ermöglicht, dass der externe Datensensor unabhängig vom internen Datensensor agieren kann. Damit kann der Betrieb der Maschine verbessert werden.

Ebenfalls vorteilhaft ist, wenn der externe Datensensor auf der elektronischen Recheneinrichtung ausgebildet ist. Mit anderen Worten ist der externe Datensensor zwar auf der elektronischen Recheneinrichtung ausgebildet, jedoch nicht mit der Steuerungsfunktion ausgebildet. Somit kann auf einfache Art und Weise und bauteilreduziert die Steuerung der Maschine realisiert werden.

Erfindungsgemäß ist vorgesehen, dass der interne Datensensor zum Überwachen der Steuerungsfunktion ausgebildet ist. Insbesondere kann der interne Datensensor somit die Steuerungsfunktion auf ihre Funktionsfähigkeit überprüfen. Sollte es beispielsweise zu einer Einschränkung der Steuerungsfunktion beziehungsweise einem Ausfall der Steuerungsfunktion kommen, so kann der interne Datensensor entsprechend das Sicherheitssignal erzeugen und die Sicherheitseinrichtung ansteuern, welche beispielsweise ein Notstopp oder eine reduzierte Funktion der Maschine initiieren kann.

Es hat sich weiterhin als vorteilhaft erwiesen, wenn der interne Datensensor zum Anpassen der Steuerungsfunktion ausgebildet ist. Beispielsweise können in Abhängigkeit eines entsprechenden Tests entsprechende Parameter der Steuerungsfunktion angepasst werden. Beispielsweise kann bei einem detektierten Fehler eine Drehzahlgeschwindigkeit der Maschine reduziert werden, sodass ein sicherer Systemzustand erreicht werden kann.

Ferner hat es sich als vorteilhaft erwiesen, wenn der interne Datensensor zum Durchführen eines Funktionstests der Steuerungsfunktion ausgebildet ist. Insbesondere kann der Funktionstest kontrolliert durchgeführt werden. Somit kann der interne Datensensor kontinuierlich die Steuerungsfunktion überwachen und somit einen sicheren Systemzustand der Schaltungsanordnung beziehungsweise des Maschinensystems gewährleisten.

Weiterhin ist erfindungsgemäß vorgesehen, dass der externe Datensensor zum Überwachen der Steuerungsfunktion ausgebildet ist. Insbesondere kann der externe Datensensor somit die Steuerungsfunktion auf ihre Funktionsfähigkeit überprüfen. Sollte es beispielsweise zu einer Einschränkung der Steuerungsfunktion beziehungsweise einem Ausfall der Steuerungsfunktion kommen, so kann der externe Datensensor entsprechend das Sicherheitssignal erzeugen und die Sicherheitseinrichtung ansteuern, welche beispielsweise ein Notstopp oder eine reduzierte Funktion der Maschine initiieren kann.

Des Weiteren hat es sich als vorteilhaft erwiesen, wenn der externe Datensensor zum Anpassen der Steuerungsfunktion ausgebildet ist. Beispielsweise können in Abhängigkeit eines entsprechenden Tests entsprechende Parameter der Steuerungsfunktion angepasst werden. Beispielsweise kann bei einem detektierten Fehler eine Drehzahlgeschwindigkeit der Maschine reduziert werden, sodass ein sicherer Systemzustand erreicht werden kann.

Eine weitere vorteilhafte Ausgestaltungsform sieht vor, dass der externe Datensensor zum Durchführen eines Funktionstests der Steuerungsfunktion ausgebildet ist. Insbesondere kann der Funktionstest kontrolliert durchgeführt werden. Somit kann der externe Datensensor kontinuierlich die Steuerungsfunktion überwachen und somit einen sicheren Systemzustand der Schaltungsanordnung beziehungsweise des Maschinensystems gewährleisten.

Eine weitere vorteilhafte Ausgestaltungsform sieht vor, dass das erste Sicherheitssignal über eine erste Datenleitung an die Sicherheitseinrichtung übertragbar ist und das zweite Sicherheitssignal über eine zur ersten Datenleitung unabhängige zweite Datenleitung übertragbar ist. Somit sind redundante Datenleitungen vorhanden, über welche ein Sicherheitssignal übertragen werden kann. Somit kann auch bei einem entsprechenden Fehlerfall in der elektronischen Recheneinrichtung dennoch zuverlässig beispielsweise das Sicherheitssignal über den externen Datensensor erzeugt werden. Dadurch kann ein sicherer Systemzustand der Schaltungsanordnung beziehungsweise des Maschinensystems realisiert werden.

Ebenfalls vorteilhaft ist, wenn der interne Datensensor mit dem externen Datensensor über eine Kommunikationsleitung miteinander gekoppelt sind. Somit kann eine zuverlässige Kommunikation zwischen dem internen Datensensor und dem externen Datensensor realisiert werden. Dies führt dazu, dass insbesondere entsprechende Fehlfunktionen zuverlässig im Maschinensystem erkannt werden können und somit ein sicherer Systemzustand erreicht werden kann.

Ein weiterer Aspekt der Erfindung betrifft ein Maschinensystem mit zumindest einer Maschine, einer Sicherheitseinrichtung und mit einer Schaltungsanordnung zum Steuern der Maschine nach dem vorhergehenden Aspekt.

Vorteilhafte Ausgestaltungsformen der Schaltungsanordnung sind als vorteilhafte Ausgestaltungsform des Messsystems sowie des Verfahrens anzusehen. Die Schaltungsanordnung sowie das Messsystem weisen hierzu insbesondere gegenständliche Merkmale auf, um entsprechende Verfahrensschritte durchführen zu können.

Unter einer Recheneinheit/elektronische Recheneinrichtung kann insbesondere ein Datenverarbeitungsgerät verstanden werden, das einen Verarbeitungsschaltkreis enthält. Die Recheneinheit kann also insbesondere Daten zur Durchführung von Rechenoperationen verarbeiten. Darunter fallen gegebenenfalls auch Operationen, um indizierte Zugriffe auf eine Datenstruktur, beispielsweise eine Umsetzungstabelle, LUT (englisch: "look-up table"), durchzuführen.

Die Recheneinheit kann insbesondere einen oder mehrere Computer, einen oder mehrere Mikrocontroller und/oder einen oder mehrere integrierte Schaltkreise enthalten, beispielsweise eine oder mehrere anwendungsspezifische integrierte Schaltungen, ASIC (englisch: "application-specific integrated circuit"), eines oder mehrere feldprogrammierbare Gate-Arrays, FPGA, und/oder eines oder mehrere Einchipsysteme, SoC (englisch: "system on a chip"). Die Recheneinheit kann auch einen oder mehrere Prozessoren, beispielsweise einen oder mehrere Mikroprozessoren, eine oder mehrere zentrale Prozessoreinheiten, CPU (englisch: "central processing unit"), eine oder mehrere Grafikprozessoreinheiten, GPU (englisch: "graphics processing unit") und/oder einen oder mehrere Signalprozessoren, insbesondere einen oder mehrere Digitalsignalprozessoren, DSP, enthalten. Die Recheneinheit kann auch einen physischen oder einen virtuellen Verbund von Computern oder sonstigen der genannten Einheiten beinhalten.

In verschiedenen Ausführungsbeispielen beinhaltet die Recheneinheit eine oder mehrere Hardware- und/oder Softwareschnittstellen und/oder eine oder mehrere Speichereinheiten.

Eine Speichereinheit kann als flüchtiger Datenspeicher, beispielsweise als dynamischer Speicher mit wahlfreiem Zugriff, DRAM (englisch: "dynamic random access memory") oder statischer Speicher mit wahlfreiem Zugriff, SRAM (englisch: "static random access memory"), oder als nicht-flüchtiger Datenspeicher, beispielsweise als Festwertspeicher, ROM (englisch: "read-only memory"), als programmierbarer Festwertspeicher, PROM (englisch: "programmable read-only memory"), als löschbarer programmierbarer Festwertspeicher, EPROM (englisch: "erasable programmable read-only memory"), als elektrisch löschbarer programmierbarer Festwertspeicher, EEPROM (englisch: "electrically erasable programmable read-only memory"), als Flash-Speicher oder Flash-EEPROM, als ferroelektrischer Speicher mit wahlfreiem Zugriff, FRAM (englisch: "ferroelectric random access memory"), als magnetoresistiver Speicher mit wahlfreiem Zugriff, MRAM (englisch: "magnetoresistive random access memory") oder als Phasenänderungsspeicher mit wahlfreiem Zugriff, PCRAM (englisch: "phase-change random access memory"), ausgestaltet sein.

Für Anwendungsfälle oder Anwendungssituationen, die sich bei einem erfindungsgemäßen Verfahren ergeben können und die hierin nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Unabhängig vom grammatikalischen Geschlecht eines bestimmten Begriffes sind Personen mit männlicher, weiblicher oder anderer Geschlechteridentität mit umfasst.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren gezeigten Merkmale und Merkmalskombinationen können nicht nur in der jeweils angegebenen Kombination, sondern auch in anderen Kombinationen von der Erfindung umfasst sein. Es können insbesondere auch Ausführungen und Merkmalskombinationen von der Erfindung umfasst sein, die nicht alle Merkmale eines ursprünglich formulierten Anspruchs aufweisen.

Dabei zeigt:

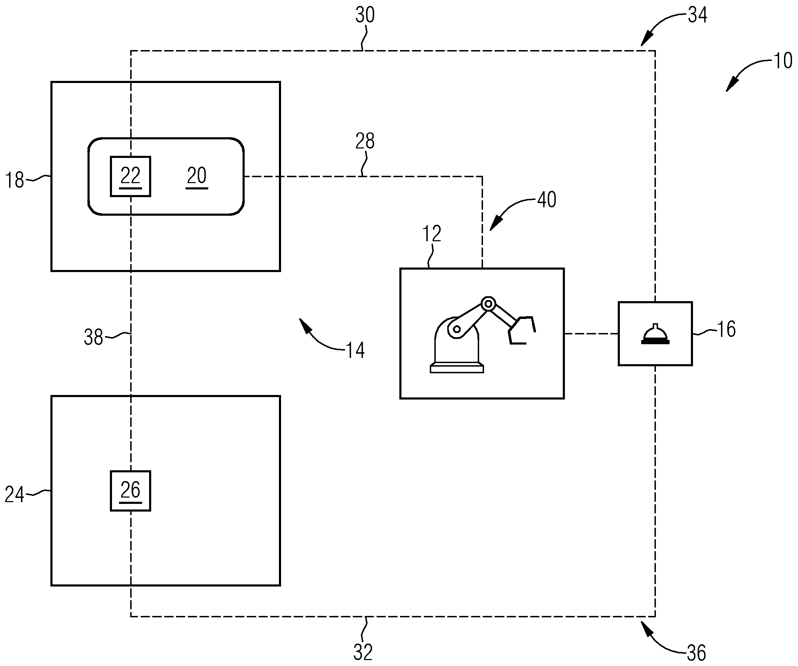

- FIG 1: ein schematisches Blockschaltbild gemäß einer Ausführungsform eines Maschinensystems mit einer Ausführungsform einer Schaltungsanordnung.

Die Erfindung wird im Folgenden anhand konkreter Ausführungsbeispiele und zugehöriger schematischer Zeichnungen näher erläutert. In den Figuren können gleiche oder funktionsgleiche Elemente mit denselben Bezugszeichen versehen sein. Die Beschreibung gleicher oder funktionsgleicher Elemente wird gegebenenfalls nicht notwendigerweise bezüglich verschiedener Figuren wiederholt.

FIG 1 zeigt ein schematisches Blockschaltbild gemäß einer Ausführungsform eines Maschinensystems 10. Das Maschinensystem 10 weist zumindest eine Maschine 12 sowie eine Sicherheitseinrichtung 14 auf. Ferner weist das Maschinensystem 10 eine Schaltungsanordnung 14 auf. Das Maschinensystem 10 weist ferner zumindest eine Sicherheitseinrichtung 16 und eine elektronische Recheneinrichtung 18 mit zumindest einer Steuerungsfunktion 20 auf. Die Steuerungsfunktion 20 weist wiederum einen internen Datensensor 22 auf. Ferner weist im vorliegenden Ausführungsbeispiel, jedoch lediglich beispielhaft, die Schaltungsanordnung 14 eine zweite elektronische Recheneinrichtung 24 mit einem externen Datensensor 26 auf.

Insbesondere zeigt somit die FIG 1 die Schaltungsanordnung 14 für die Steuerung der Maschine 12, mit zumindest der ersten elektronischen Recheneinrichtung 18 mit der Steuerungsfunktion 20 zum Erzeugen eines Steuersignals 28 für die Maschine 12, wobei die erste elektronische Recheneinrichtung zumindest den internen Datensensor 22 zum Erzeugen eines ersten Sicherheitssignals 30 für die Sicherheitseinrichtung 16 für die Maschine 12 aufweist.

Es ist dabei insbesondere vorgesehen, dass der externe Datensensor 26 vorgesehen ist, welcher mit dem internen Datensensor 22 gekoppelt ist, wobei der externe Datensensor 26 zum Erzeugen eines zweiten Sicherheitssignals 32 für die Sicherheitseinrichtung 16 ausgebildet ist.

Wie in der FIG 2 gezeigt, ist der externe Datensensor 26 auf der zweiten elektronischen Recheneinrichtung 24 der Schaltungsanordnung 14 ausgebildet. Alternativ kann der externe Datensensor 26 auch auf der elektronischen Recheneinrichtung 18 ausgebildet sein.

Es ist dabei insbesondere vorgesehen, dass der interne Datensensor 22 zum Überwachen der Steuerungsfunktion 20 ausgebildet ist. Ferner ist der interne Datensensor 22 zum Anpassen der Steuerungsfunktion 20 ausgebildet. Des Weiteren ist der interne Datensensor 22 zum Durchführen eines Funktionstests der Steuerungsfunktion 20 ausgebildet.

Insbesondere kann ferner vorgesehen sein, dass der externe Datensensor 26 zum Anpassen der Steuerungsfunktion 20 ausgebildet ist. Ferner kann der externe Datensensor 26 zum Durchführen eines Funktionstests der Steuerungsfunktion 20 ausgebildet sein. Des Weiteren kann vorgesehen sein, dass der externe Datensensor 26 zum Anpassen der Steuerungsfunktion 20 ausgebildet ist.

Die FIG 1 zeigt ferner, dass das erste Sicherheitssignal 30 über eine erste Datenleitung 34 an die Sicherheitseinrichtung 16 übertragbar ist und das zweite Sicherheitssignal 32 über eine zur ersten Datenleitung 34 unabhängige zweite Datenleitung 36 übertragbar ist.

Des Weiteren zeigt die FIG 1, dass der interne Datensensor 22 mit dem externen Datensensor 26 über eine Kommunikationsleitung 38 miteinander gekoppelt sind.

Insbesondere zeigt somit die FIG 1 eine verteilte, zeitgesteuerte Schaltungsanordnung 14 mit der Steuerungsfunktion 20 zum Steuern der Maschine 12 auf der ersten elektronischen Recheneinrichtung 18. Die Steuerungsfunktion 20 steuert wiederum die Maschine 12 über eine Steuerleitung 40. Die Schaltungsanordnung 14 verfügt über die Sicherheitseinrichtung 16, die das Maschinensystem 10, insbesondere die Maschine 12, in einen sicheren Zustand versetzen kann. Das entsprechende Sicherheitssignal 30, 32 kann über die entsprechenden Datenleitungen 34, 36 über die erste elektronische Recheneinrichtung 18 gesteuert werden. Der interne Datensensor 22 hat dabei die Eigenschaften, dass er interne Daten von der Steuerungsfunktion 20 überwachen kann, die internen Daten von der Steuerungsfunktion 20 manipulieren/anpassen kann, Testprogramme ausführen kann, die internen Daten von der Steuerungsfunktion 20 prüfen und gegebenenfalls manipulieren kann, und das Sicherheitssignal 30 erzeugen kann.

Der externe Datensensor 26 kann dabei auf der gleichen elektronischen Recheneinrichtung 18 ausgebildet sein wie der interne Datensensor 22, kann aber auch auf der zweiten elektronischen Recheneinrichtung 24, wie vorliegend gezeigt, ausgebildet sein. Der externe Datensensor 26 hat dabei die Eigenschaften, dass er die internen Daten von der Steuerungsfunktion 20 über den internen Datensensor 22 überwachen kann. Ferner kann er mit dem internen Datensensor 22 interne Daten von der Steuerungsfunktion 20 manipulieren/anpassen. Des Weiteren kann der externe Datensensor 26 mittels des internen Datensensors 22 Testprogramme ausführen, die internen Daten der Steuerungsfunktion 20 überprüfen und gegebenenfalls manipulieren. Ferner kann über die zweite Datenleitung 36 das zweite Sicherheitssignal 32 ausgelöst werden. Die Kommunikationsleitung 38 dient dabei als entsprechender Link zum Datenaustausch zwischen dem internen Datensensor 22 und dem externen Datensensor 26.

## Patentansprüche

1. Schaltungsanordnung (14) für die Steuerung einer Maschine (12), mit zumindest einer ersten elektronischen Recheneinrichtung (18) mit einer Steuerungsfunktion (20) zum Erzeugen eines Steuersignals (28) für die Maschine (12), wobei die erste elektronische Recheneinrichtung (18) zumindest einen internen Datensensor (22) zum Erzeugen eines ersten Sicherheitssignals (30) für eine Sicherheitseinrichtung (16) für die Maschine (12) aufweist, wobei
der interne Datensensor (22) Teil der Steuerungsfunktion (20) ist, wobei
der interne Datensensor (22) zum Überwachen der Steuerungsfunktion (20) ausgebildet ist,
**dadurch gekennzeichnet, dass**
ein externer Datensensor (26) vorgesehen ist, welcher mit dem internen Datensensor (22) gekoppelt ist, wobei der externe Datensensor (26) zum Erzeugen eines zweiten Sicherheitssignals (32) für die Sicherheitseinrichtung (16) ausgebildet ist, wobei
der externe Datensensor (26) extern zur Steuerungsfunktion (20) bereitgestellt wird, wobei
der externe Datensensor (26) zum Überwachen der Steuerungsfunktion (20) ausgebildet ist.

2. Schaltungsanordnung (14) nach Anspruch 1, **dadurch gekennzeichnet, dass**
der externe Datensensor (26) auf einer zweiten elektronischen Recheneinrichtung (24) der Schaltungsanordnung (14) ausgebildet ist.

3. Schaltungsanordnung (14) nach Anspruch 1, **dadurch gekennzeichnet, dass**
der externe Datensensor (26) auf der ersten elektronischen Recheneinrichtung (18) ausgebildet ist.

4. Schaltungsanordnung (14) nach einem der vorhergehenden Ansprüche, **dadurch gekennzeichnet, dass**
der interne Datensensor (22) zum Anpassen der Steuerungsfunktion (20) ausgebildet ist.

5. Schaltungsanordnung (14) nach einem der vorhergehenden Ansprüche, **dadurch gekennzeichnet, dass**
der interne Datensensor (22) zum Durchführen eines Funktionstest der Steuerungsfunktion (20) ausgebildet ist.

6. Schaltungsanordnung nach einem der vorhergehenden Ansprüche, **dadurch gekennzeichnet, dass**
der externe Datensensor (26) zum Anpassen der Steuerungsfunktion (20) ausgebildet ist.

7. Schaltungsanordnung (14) nach einem der vorhergehenden Ansprüche, **dadurch gekennzeichnet, dass**
der externe Datensensor (26) zum Durchführen eines Funktionstest der Steuerungsfunktion (20) ausgebildet ist.

8. Schaltungsanordnung (14) nach einem der vorhergehenden Ansprüche, **dadurch gekennzeichnet, dass**
das erste Sicherheitssignal (30) über eine erste Datenleitung (24) an die Sicherheitseinrichtung (16) übertragbar ist und das zweite Sicherheitssignal (32) über eine zur ersten Datenleitung (34) unabhängige zweite Datenleitung (36) übertragbar ist.

9. Schaltungsanordnung (14) nach einem der vorhergehenden Ansprüche, **dadurch gekennzeichnet, dass**
der interne Datensensor (22) mit dem externen Datensensor (26) über eine Kommunikationsleitung (38) miteinander gekoppelt sind.

10. Maschinensystem (10) mit zumindest einer Maschine (12), einer Sicherheitseinrichtung (16) und mit einer Schaltungsanordnung (14) zum Steuern der Maschine (12) nach einem der Ansprüche 1 bis 9.

## Claims

1. Circuit arrangement (14) for controlling a machine (12), comprising at least one first electronic computing device (18) having a control function (20) for generating a control signal (28) for the machine (12), wherein the first electronic computing device (18) has at least one internal data sensor (22) for generating a first safety signal (30) for a safety device (16) for the machine (12), wherein
the internal data sensor (22) is part of the control function (20), wherein
the internal data sensor (22) is designed to monitor the control function (20),
**characterized in that**
an external data sensor (26) which is coupled to the internal data sensor (22) is provided, wherein the external data sensor (26) is designed to generate a second safety signal (32) for the safety device (16), wherein
the external data sensor (26) is provided externally to the control function (20), wherein
the external data sensor (26) is designed to monitor the control function (20).

2. Circuit arrangement (14) according to Claim 1, **characterized in that**
the external data sensor (26) is formed on a second electronic computing device (24) of the circuit arrangement (14).

3. Circuit arrangement (14) according to Claim 1, **characterized in that**
the external data sensor (26) is formed on the first electronic computing device (18).

4. Circuit arrangement (14) according to any one of the preceding claims, **characterized in that**
the internal data sensor (22) is designed to adapt the control function (20).

5. Circuit arrangement (14) according to any one of the preceding claims, **characterized in that**
the internal data sensor (22) is designed to test the function of the control function (20).

6. Circuit arrangement according to any one of the preceding claims, **characterized in that**
the external data sensor (26) is designed to adapt the control function (20).

7. Circuit arrangement (14) according to any one of the preceding claims, **characterized in that**
the external data sensor (26) is designed to test the function of the control function (20).

8. Circuit arrangement (14) according to any one of the preceding claims, **characterized in that**
the first safety signal (30) can be transmitted to the safety device (16) via a first data line (24) and the second safety signal (32) can be transmitted via a second data line (36) independent of the first data line (34).

9. Circuit arrangement (14) according to any one of the preceding claims, **characterized in that**
the internal data sensor (22) and the external data sensor (26) are coupled to one another via a communication line (38).

10. Machine system (10) comprising at least one machine (12), a safety device (16) and comprising a circuit arrangement (14) for controlling the machine (12) according to any one of Claims 1 to 9.

## Revendications

1. Circuit (14) pour la commande d'une machine (12), avec au moins un premier dispositif de calcul électronique (18) avec une fonction de commande (20) pour générer un signal de commande (28) pour la machine (12), dans lequel le premier dispositif de calcul électronique (18) présente au moins un capteur de données interne (22) pour générer un premier signal de sécurité (30) pour un dispositif de sécurité (16) pour la machine (12), dans lequel
le capteur de données interne (22) fait partie de la fonction de commande (20), dans lequel
le capteur de données interne (22) est conçu pour surveiller la fonction de commande (20),
**caractérisé en ce que**
un capteur de données externe (26) est prévu, lequel est couplé au capteur de données interne (22), dans lequel le capteur de données externe (26) est conçu pour générer un deuxième signal de sécurité (32) pour le dispositif de sécurité (16), dans lequel
le capteur de données externe (26) est prévu à l'extérieur de la fonction de commande (20), dans lequel
le capteur de données externe (26) est conçu pour surveiller la fonction de commande (20).

2. Circuit (14) selon la revendication 1, **caractérisé en ce que**
le capteur de données externe (26) est formé sur un deuxième dispositif de calcul électronique (24) du circuit (14).

3. Circuit (14) selon la revendication 1, **caractérisé en ce que**
le capteur de données externe (26) est formé sur le premier dispositif de calcul électronique (18).

4. Circuit (14) selon l'une des revendications précédentes, **caractérisé en ce que**
le capteur de données interne (22) est conçu pour adapter la fonction de commande (20).

5. Circuit (14) selon l'une des revendications précédentes, **caractérisé en ce que**
le capteur de données interne (22) est conçu pour effectuer un test de fonctionnement de la fonction de commande (20).

6. Circuit selon l'une des revendications précédentes, **caractérisé en ce que**
le capteur de données externe (26) est conçu pour adapter la fonction de commande (20).

7. Circuit (14) selon l'une des revendications précédentes, **caractérisé en ce que**
le capteur de données externe (26) est conçu pour effectuer un test de fonctionnement de la fonction de commande (20).

8. Circuit (14) selon l'une des revendications précédentes, **caractérisé en ce que**
le premier signal de sécurité (30) peut être transmis au dispositif de sécurité (16) par l'intermédiaire d'une première ligne de données (24) et le deuxième signal de sécurité (32) peut être transmis par l'intermédiaire d'une deuxième ligne de données (36) indépendante de la première ligne de données (34).

9. Circuit (14) selon l'une des revendications précédentes, **caractérisé en ce que**
le capteur de données interne (22) et le capteur de données externe (26) sont couplés entre eux par l'intermédiaire d'une ligne de communication (38).

10. Système de machine (10) comprenant au moins une machine (12), un dispositif de sécurité (16) et un circuit (14) pour la commande de la machine (12) selon l'une des revendications 1 à 9.
